# EUROPÄISCHE PATENTSCHRIFT

(11) **EP 3 968 810 B1**
(45) Veröffentlichungstag und Bekanntmachung des Hinweises auf die Patenterteilung: **11.10.2023**
(21) Anmeldenummer: 20740189.4
(22) Anmeldetag: 15.05.2020
(51) Int. Cl.: A01K 27/00, A44C 5/20, B68B 1/02, B68B 1/04, B68B 5/00

(54) **ZAUM-STIRNBAND**
BRIDLE HEADBAND
FRONTAL DE BRIDE

(30) Priorität: 17.05.2019 DE 202019102820 U
(43) Veröffentlichungstag der Anmeldung: 23.03.2022
(73) Patentinhaber: Magic Tack Holding UG (Haftungsbeschränkt), 67551 Worms (DE)
(72) Erfinder: REICHERT, David, 67551 Worms (DE)
(74) Vertreter: Beyer, Carsten
(86) Internationale Anmeldenummer: PCT/DE2020/100427
(87) Internationale Veröffentlichungsnummer: WO 2020/233746

(56) Entgegenhaltungen:
- DE-U-202010 007 009
- DE-U1-202012 000 029
- US-A1- 2012 103 014
- US-A1- 2015 074 954
- US-A1- 2017 224 066

## Beschreibung

Die vorliegende Erfindung betrifft ein Zaum-Stirnband, insbesondere ein Pferdezaum-Stirnband.

Aus DE 20 2010 007 009 U1 ist ein Pferdezaum-Stirnband mit austauschbaren Dekorationselementen und magnetischer Befestigung bekannt. Das Stirnband weist anstelle fest angebrachter Dekorationselemente einen Magnetstreifen auf, und ein auswechselbares zusätzliches Dekorationsband, umfassend einen weiteren Magnetstreifen mit Dekorationselementen, bspw. Strass- oder Schmucksteine, Perlen oder Figuren, kann austauschbar auf dem Stirnband angebracht werden.

DE 20 2015 003 530 U1 zeigt ein Pferdezaum-Stirnband, bei dem ein Teil des Lederbandes durch einen fest eingearbeiteten Magnetstreifen ersetzt ist. Ein als Magnetband ausgestaltetes zusätzliches Dekorationsband mit Dekorationselementen kann dann austauschbar auf dem fest eingearbeiteten Magnetstreifen des Stirnbands befestigt werden.

In technisch vergleichbarer Weise offenbart DE 20 2010 007 166 U1 ein Halsband für Hunde mit durch Magnetstreifen befestigtem und austauschbarem Dekorationselement, DE 20 2010 009 377 U1 einen Ledergürtel mit austauschbaren Dekorationselementen und magnetischer Befestigung, und DE 20 2012 000 029 U1 ein Lederarmband mit magnetisch austauschbaren Dekorationselementen.

Bei dem vorbekannten Stand der Technik ist kritisch, dass stets ein bandförmiger Grundkörper zur Verfügung stehen muss und dieser so umgearbeitet bzw. angepasst werden muss, dass der Grundkörper mit einem Magnetstreifen versehen werden kann. Eine Verwendung des mit einem Magnetstreifen versehenen Grundkörpers ohne aufgelegtes Dekorationsband wird üblicherweise vermieden, da der Magnetstreifen alleine gerade nicht den ansonsten bezweckten dekorativen Effekt entfaltet.

Bei den Lösungen gemäß Stand der Technik müssen die Magnetstreifen des Grundkörpers sowie des aufzusetzenden Dekorationsbandes genau aufeinander passend ausgerichtet werden, was etwas Sorgfalt erfordert. Wird der Grundkörper zusammen mit dem aufgelegten und magnetisch gehaltenen Dekorationsband entlang seiner Längsachse verformt, neigt das Dekorationsband aufgrund seiner eigenen Steifigkeit dazu, sich vom Grundkörper abzulösen.

Gemäß US 2017/224066 A1 bildet ein austauschbares Schmucksystem ein Armband, eine Halskette, einen Ohrring und/oder einen Ring als Schmuckstück. Das austauschbare Schmucksystem umfasst mindestens zwei Schmuckstrangabschnitte, von denen jeder einen zentralen Körper aufweist, der sich mittig zwischen zwei Endwänden befindet, die einander entgegengesetzt anziehende, zusammenpassende magnetische Abschnitte umfassen, die einander gegenüberliegend auf dem zentralen Körper angeordnet sind. Die zusammenpassenden magnetischen Abschnitte umfassen einen ersten Abschnitt mit einem vertieften magnetischen weiblichen Rand, der sich erstreckt, um einen magnetischen weiblichen Hohlraumabschnitt zu bilden, und einen zusammenpassenden erhöhten magnetischen männlichen Rand, der sich erstreckt, um einen magnetischen männlichen erhöhten Abschnitt zu bilden.

US 2012/103014 A1 offenbart eine Schmuckbefestigungsvorrichtung mit einem Trageelement und zugehörigem Schmuck; mit einer Verbindungsvorrichtung, die an dem Trageelement angebracht und ferner mit einer Klemmvorrichtung und einer zugehörigen reibungserhöhenden Vorrichtung verbunden ist. Die reibungserhöhende Vorrichtung weist optional eine Umhüllung aus Silikon, Kunststoff, Gummi, Gel oder ähnlichem Material auf, und ist um einen Teil eines Basisteils der Klemmvorrichtung angeordnet. Außerdem hält die Klemmvorrichtung die Haare eines Benutzers fest, wenn sie zusammengeklappt ist.

In US 2015/074954 A1 offenbarte Systeme und Verfahren für Magnetverschlüsse umfassen einen selbstausrichtenden, ineinandergreifenden Magnetverschluss. Wenn zwei Hälften in unmittelbarer Nähe zueinander platziert werden, richtet die magnetische Anziehungskraft der Magnete in den Verschlüssen die Teile aus, und die mechanischen Merkmale eines Keils, einer Keilnut und einer Gleitfläche fluchten. Diese Merkmale halten zwei Spangen zusammen, wobei gegenüberliegende Gleitflächen übereinstimmen und Passfedern und Keilnuten ineinandergreifen.

Der vorliegenden Erfindung liegt die Aufgabe zugrunde, die sich aus dem Stand der Technik ergebenden Nachteile zu überwinden.

Ferner liegt die Aufgabe zugrunde, ein Zaum-Stirnband anzugeben, bei dem eine einfache und sichere Befestigung bei vielseitiger Verwendbarkeit und vergleichsweise geringen Bereitstellungskosten realisiert ist.

Einen Beitrag zur Lösung der vorstehend genannten Aufgabe leistet ein Zaum-Stirnband, insbesondere Pferdezaum-Stirnband, nach den Merkmalen von Anspruch 1.

Das Zaum-Stirnband weist zunächst ein bandförmiges Element zur Bildung eines Zaum-Stirnbands auf.

Dieses bandförmige Element ist so ausgestaltet, dass an beiden Enden des bandförmigen Elements jeweils ein magnetisches Element zur lösbaren Verbindung des jeweiligen Endes an einem zweiten magnetischen Element angeordnet ist.

Das erfindungsgemäße Zaum-Stirnband, insbesondere Pferdezaum-Stirnband, umfasst ein solches bandförmiges Element, und umfasst zwei Gegenstücke, welche jeweils ein zweites magnetisches Element aufweisen, wobei jeweils ein Ende des bandförmigen Elements lösbar an oder in einem Gegenstück, nämlich an dem zweiten magnetischen Element des Gegenstücks, festlegbar bzw. festgelegt ist.

Vorteilhafte Ausgestaltungen und Weiterbildungen der Erfindung sind Gegenstand der abhängigen Ansprüche.

Dem erfindungsgemäßen Gegenstand liegt die Idee zugrunde, dass an beiden Enden des bandförmigen Elements jeweils ein magnetisches Element zur lösbaren Verbindung des jeweiligen Endes an einem zweiten magnetischen Element angeordnet ist. Somit wird das bandförmige Element jeweils nur an seinen Enden gehalten und kann damit entlang seiner Längsachse eine maximale Flexibilität aufweisen.

Mit anderen Worten weist das bandförmige Element vorzugsweise an jedem Ende mindestens ein magnetisches Element auf, wobei die magnetischen Elemente der beiden Enden getrennt voneinander ausgebildet sind und außer über das bandförmige Element keine Verbindung zueinander aufweisen.

Es ist damit sicher vermieden, dass sich das bandförmige Element aufgrund einer Verformung entlang der Längsachse von der das Element haltenden Unterlage ablöst, da eine Festlegung des bandförmigen Elements entlang seiner Längsachse - insbesondere mit einem darunter angeordneten Magnetstreifen - nunmehr entfallen kann.

Das bandförmige Element kann sehr schnell und sicher ausgetauscht bzw. befestigt werden, indem dessen Enden einfach in die Gegenstücke eingeführt werden. Ein genaues Ausrichten und Anheften an einen darunter angeordneten Magnetstreifen kann somit entfallen.

Durch den Entfall eines Magnetstreifens kann ferner ein bandförmiger Grundkörper, welcher einen Magnetstreifen aufweist, komplett entfallen. Sofern dennoch ein bandförmiger Grundkörper vorgesehen wird, auf den das bandförmige Element aufgelegt werden soll, muss dieser jedenfalls nicht mehr umgearbeitet und mit einem Magnetstreifen versehen werden.

Der erfindungsgemäße Gegenstand erweist sich daher auch als besonders vielseitig verwendbar, während gleichzeitig die Bereitstellungskosten gesenkt werden können.

Als "magnetisches Element" wird im Rahmen der Erfindung wahlweise ein Permanentmagnet oder auch ein Element aus einem ferrimagnetischen oder ferromagnetischen Material verstanden. Eine magnetische Anziehung zwischen einem ersten magnetischen Element und einem zweiten magnetischen Element nach dem Verständnis der Erfindung umfasst sowohl die Anziehung zwischen zwei Permanentmagneten als auch die Anziehung zwischen einem Permanentmagneten und einem Element aus einem ferrimagnetischen oder ferromagnetischen Material. Hierzu wird auf den Eintrag "Dauermagnet" in der deutschsprachigen Wikipedia^{®} verwiesen (Abrufdatum 15.05.2019).

Als "Dekorationselement" wird im Rahmen der Erfindung verstanden jede Art von Verzierung oder Ausschmückung, Strass- oder Schmucksteine, Perlen oder Figuren, oder dergleichen Elemente.

Im Folgenden werden die erfindungsgemäßen Aspekte weiter erörtert, wozu teilweise auf nicht limitierende vorteilhafte Ausgestaltungen und Weiterbildungen der Erfindung Bezug genommen wird. Die Merkmale vorteilhafter Weiterbildungen lassen sich dabei einzeln oder auch in beliebiger Kombination realisieren, wodurch weitere vorteilhafte Ausgestaltungen der Erfindung geschaffen werden.

Im Rahmen der gesamten vorliegenden Erörterung von Ausgestaltungen, Weiterbildungen, Ausführungsbeispielen und Ausführungsformen des erfindungsgemäßen Gegenstands werden auch Verwendungen des erfindungsgemäßen Gegenstands beschrieben. Diese Verwendungen liegen dabei ausdrücklich ebenfalls im Rahmen der vorliegenden Erfindung.

In einer ersten bevorzugten Weiterbildung des erfindungsgemäßen Zaum-Stirnbands ist das Gegenstück als Hülse ausgeführt, in welcher das zweite magnetische Element angeordnet ist, und in die ein Ende des bandförmigen Elements zur lösbaren Festlegung des Endes an dem Gegenstück, nämlich an dessen zweitem magnetischen Element, einführbar bzw. eingeführt ist. Somit ergibt sich eine besonders einfache und sichere Festlegung des ersten magnetischen Elements des bandförmigen Elements an dem zweiten magnetischen Element des Gegenstücks, nämlich einfach durch Einschieben des jeweiligen Endes des bandförmigen Elements in das Gegenstück, nämlich in die Hülse.

Das Gegenstück, insbesondere als Hülse oder eine solche Hülse umfassend, kann vorzugsweise fest in das Zaumzeug integriert sein. Somit ergibt sich eine besonders sichere Festlegung des bandförmigen Elements.

Alternativ, jedoch ebenfalls bevorzugt, kann das Gegenstück zur Anbringung an ein Zaumzeug eine Schlaufe aufweisen, deren Durchgang im Wesentlichen senkrecht zur Längsrichtung des bandförmigen Elements ausgerichtet ist. Mit anderen Worten kann bei dieser Ausführungsform das Gegenstück in einen Backenriemen des Zaumzeugs eingefädelt werden, und kann dann zusammen mit dem gegenüberliegenden Gegenstück das bandförmige Element in einer der vorbeschriebenen Weisen aufnehmen.

Vorzugsweise ist auch das Gegenstück aus Leder oder aus flexiblem Kunststoff gebildet.

In einer weiteren vorteilhaften Ausgestaltung des erfindungsgemäßen Zaum-Stirnbands ist das Gegenstück aus einem Materialstreifen gefertigt, wobei der Materialstreifen zur Bildung einer Hülse, und ggf. zur Bildung einer Schlaufe, einen doppellagigen Bereich aufweist. In die entstehende Hülse kann dann das Ende des bandförmigen Elements besonders einfach eingeführt werden. Zusätzlich kann die Bildung eines doppellagigen Bereichs mit der Bildung einer Schlaufe verknüpft werden, wodurch sich bspw. die Möglichkeit des Einfädelns des Gegenstücks in ein Zaumzeug ergeben kann, nämlich wie bereits weiter oben erwähnt.

In einer vorteilhaften Weiterbildung der letztgenannten Ausführungsform ist ferner das zweite magnetische Element innerhalb des doppellagigen Bereichs aufgenommen, und kann dort insbesondere verklebt oder vernäht sein. Das zweite magnetische Element des Gegenstücks kann somit vollständig innerhalb des Gegenstücks, von außen kaum oder gar nicht sichtbar, angeordnet werden.

In einer weiteren bevorzugten Weiterbildung der Erfindung ist das bandförmige Element aus Leder oder aus flexiblem Kunststoff gebildet.

Bevorzugt ist ferner eine Ausgestaltung, bei der das bandförmige Element auf seiner Oberseite Dekorationselemente aufweist.

Eine weitere vorteilhafte Ausführungsform zeichnet sich dadurch aus, dass bei dem bandförmigen Element das magnetische Element teilweise oder vollständig von dem Material des bandförmigen Elements umschlossen ist. Mit anderen Worten kann das erste magnetische Element teilweise oder vollständig in das Material des bandförmigen Elements eingebettet sein.

### Figuren

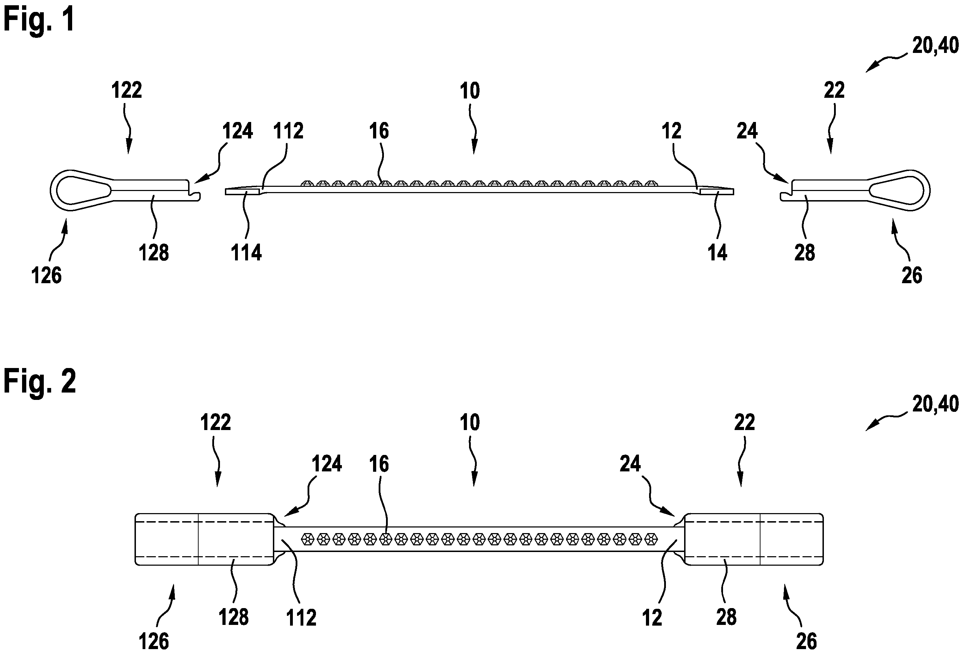

Ergänzend bzw. zusätzlich zu den bereits erörterten vorteilhaften Ausgestaltungen und Weiterbildungen der Lehre werden in der Zeichnung im Umfang der **Figuren 1 bis 3** dargestellte Ausführungsbeispiele von erfindungsgemäßen Gegenständen und deren Verwendungen im Folgenden näher erläutert. Die anhand der Zeichnung erörterten Beispiele schränken die Erfindung jedoch nicht auf die gezeigten Beispiele ein. Bei der Erörterung der Ausführungsbeispiele anhand der Zeichnung werden auch im Allgemeinen bevorzugte Ausgestaltungen und Weiterbildungen der Lehre aufgezeigt.

Weiterbildungen der vorstehend beschriebenen vorteilhaften Ausgestaltungen mit Merkmalen der nachstehenden Ausführungsbeispiele bilden dabei genau wie Weiterbildungen der nachstehend beschriebenen Ausführungsbeispiele mit Merkmalen der vorstehend beschriebenen Ausgestaltungen ausdrücklich weitere vorteilhafte Ausgestaltungen der Erfindung, und sind damit Teil der vorliegenden Offenbarung.

Es zeigen:
Figur 1 eine seitliche Darstellung eines bandförmigen Elements und gleichzeitig eines bevorzugten Ausführungsbeispiels des erfindungsgemäßen Zaum-Stirnbands in einer Einzeldarstellung seiner Elemente,
Figur 2 eine Aufsicht auf die Oberseite des bandförmigen Elements aus Fig. 1 und gleichzeitig des bevorzugten Ausführungsbeispiels des erfindungsgemäßen Zaum-Stirnbands aus Fig. 1 in einer Darstellung mit zusammengeführten Elementen,
Figur 3A eine seitlich gesehene, schematische Schnittansicht eines Endes des bandförmigen Elements aus den Fig. 1 und 2 in einer Gegenüberstellung mit dem zugeordneten Gegenstück des Zaum-Stirnbands,
Figur 3B den Gegenstand aus Fig. 3A, wobei hier das Ende des bandförmigen Elements in das zugeordnete Gegenstück des Zaum-Stirnbands eingeschoben ist.

**Fig. 1** zeigt eine seitliche Darstellung eines bandförmigen Elements 10 und gleichzeitig eines bevorzugten Ausführungsbeispiels des erfindungsgemäßen Zaum-Stirnbands 20 in einer Einzeldarstellung seiner Elemente.

Das bandförmige Element 10 ist hier aus Leder gefertigt und dient zur Bildung des Zaum-Stirnbands 20.

Hier ist an beiden Enden 12, 112 des bandförmigen Elements 10 jeweils ein magnetisches Element 14, 114 zur lösbaren Verbindung des jeweiligen Endes 12, 112 an einem zweiten magnetischen Element angeordnet. Die zweiten magnetischen Elemente sind hier nicht dargestellt, da sie in den weiter unten beschriebenen Gegenstücken für das bandförmige Element 10 angeordnet sind.

Das bandförmige Element 10 weist auf seiner Oberseite Dekorationselemente 16 auf, welche hier als Schmuck- bzw. Glassteine ausgebildet sind.

Die Enden 12, 112 des bandförmigen Elements 10 sind in diesem Beispiel abgeflacht und mit der Oberseite der zugehörigen magnetischen Elemente 14, 114 verklebt worden.

Somit ist ein bandförmiges Element 10 realisiert, welches jeweils nur an seinen Enden 12, 112 gehalten werden kann und damit entlang seiner Längsachse eine maximale Flexibilität aufweist. Eine einfache und rasche Austauschbarkeit ist dabei ebenfalls gegeben.

Das in Fig. 1 in seinen Einzelteilen dargestellte bevorzugte Ausführungsbeispiel des erfindungsgemäßen Zaum-Stirnbands 20, hier als Pferdezaum-Stirnband, weist in der Mitte zunächst das bandförmige Element 10 auf.

Ferner umfasst das Zaum-Stirnband 20 zwei Gegenstücke 22, 122, welche jeweils ein zweites magnetisches Element (hier nicht sichtbar) aufweisen, wobei jeweils ein Ende 12, 112 des bandförmigen Elements 10 lösbar in einem Gegenstück 22, 122, nämlich an dem zweiten magnetischen Element des Gegenstücks 22, 122, festlegbar ist.

Hierzu ist jedes Gegenstück 22, 122 als Hülse 24, 124 ausgeführt, in welcher das zweite magnetische Element angeordnet ist. In diese Hülse 24, 124 lässt sich ein Ende 12, 112 des bandförmigen Elements 10 zur lösbaren Festlegung des Endes 12, 112 an dem Gegenstück 22, 122 einführen. Dabei kommt das magnetische Element 14, 114 an dem zweiten magnetischen Element im Inneren des Gegenstücks 22, 122 bzw. der Hülse 24, 124 zu liegen, und zwischen den entstehenden magnetischen Paarungen wird eine in Längsrichtung des bandförmigen Elements 10 wirkende Haltekraft aufgebaut.

Das Gegenstück 22, 122 weist zur Anbringung an ein Zaumzeug eine Schlaufe 26, 126 auf, deren Durchgang im Wesentlichen senkrecht zur Längsrichtung des bandförmigen Elements 10 ausgerichtet ist.

Ferner ist das Gegenstück 22, 122 hier ebenfalls aus Leder gebildet, und weist im Einzelnen einen Materialstreifen aus Leder auf, wobei der Materialstreifen zur Bildung der Hülse 24, 124 und zur Bildung der Schlaufe 26, 126 einen doppellagigen Bereich 28, 128 aufweist.

Das zweite magnetische Element ist dabei innerhalb des doppellagigen Bereichs 28, 128 aufgenommen.

Das in Fig. 1 dargestellte Zaum-Stirnband 20 kann alternativ auch allgemein als Dekorationsband 40 aufgefasst werden, welches nämlich allgemein ein bandförmiges Element 10 sowie zwei zugeordnete Gegenstücke 22, 122 aufweist.

**Fig. 2** zeigt eine Aufsicht auf die Oberseite des bandförmigen Elements 10 aus Fig. 1 und gleichzeitig des bevorzugten Ausführungsbeispiels des erfindungsgemäßen Zaum-Stirnbands 20 aus Fig. 1 in einer Darstellung mit zusammengeführten Elementen.

Mit anderen Worten sind die Enden 12, 112 des bandförmigen Elements 10 hier in bestimmungsgemäßer Weise in die Gegenstücke 22, 122 bzw. die Hülsen 24, 124 eingeführt worden, wodurch die magnetischen Elemente 14, 114 (hier nicht mehr sichtbar) des bandförmigen Elements 10 an die jeweils zugeordneten zweiten magnetischen Elemente (nicht sichtbar) der Gegenstücke 22, 122 herangeführt worden sind. Aufgrund der sich hierdurch jeweils zwischen dem magnetischen Element 14, 114 und dem zugeordneten zweiten magnetischen Element aufbauenden magnetischen Anziehung wird das bandförmige Element 10 in der Längsrichtung flexibel, aber gleichzeitig sicher, und auch wieder lösbar in den Gegenstücken 22, 122 gehalten.

Die Darstellung in Fig. 2 zeigt im Ergebnis die sich während des bestimmungsgemäßen Gebrauchs des gezeigten Ausführungsbeispiels des Zaum-Stirnbands 20 ergebende Außenansicht des Gegenstands.

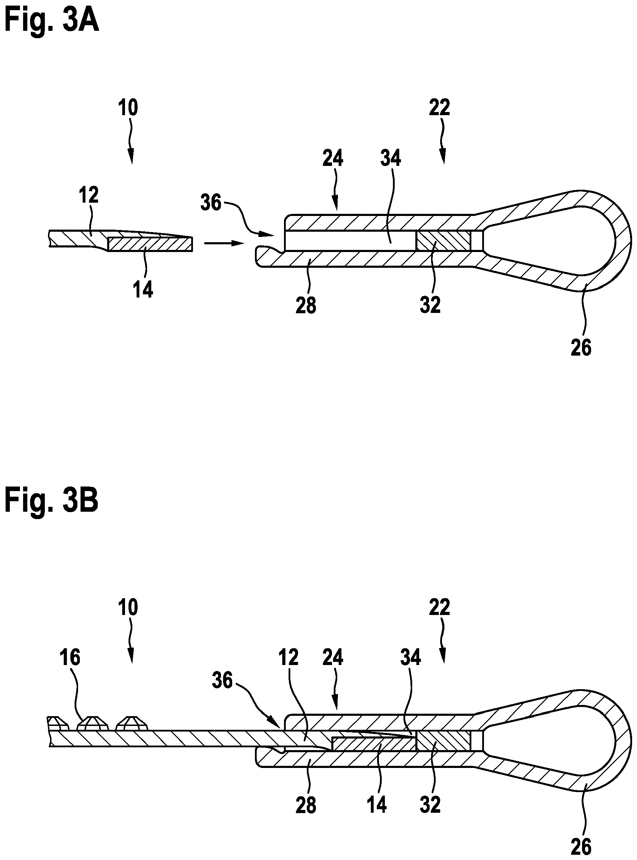

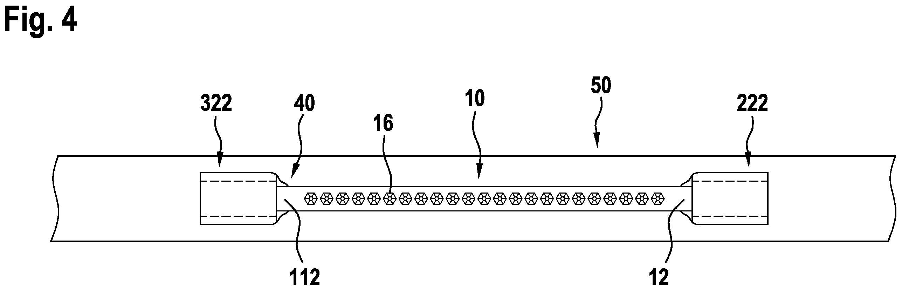

In Bezug auf Fig. 2 ist ansonsten darauf zu verweisen, dass bereits in Fig. 1 dargestellte und diesbezüglich bereits weiter oben erläuterte Bezugszeichen aus Gründen der Übersichtlichkeit in Fig. 2 zum Teil nicht erneut aufgetragen worden sind und/oder anhand von Fig. 2 zum Teil nicht erneut erläutert werden. Für die Erläuterung solcher Bezugszeichen und der zugehörigen technischen Merkmale wird zur Vermeidung von Wiederholungen vollumfänglich auf die oben stehende Beschreibung zu Fig. 1 verwiesen. Dies gilt in entsprechender Weise auch für die nachfolgenden Fig. 3A und 3B.

**Fig. 3A** zeigt eine seitlich gesehene, schematische Schnittansicht eines Endes 12 des bandförmigen Elements 10 aus den Fig. 1 und 2 in einer Gegenüberstellung mit dem zugeordneten Gegenstück 22 des Zaum-Stirnbands 20.

Wie bereits vorstehend beschrieben, weist das Ende 12 des bandförmigen Elements 10 ein magnetisches Element 14 auf. Das gegenüberliegende Gegenstück 22 weist einen Materialstreifen aus Leder auf, wobei der Materialstreifen zur Bildung der Hülse 24 und zur Bildung der Schlaufe 26 einen doppellagigen Bereich 28 aufweist.

Das zweite magnetische Element 32 ist dabei innerhalb des doppellagigen Bereichs 28 aufgenommen. Durch das Einbringen niedriger Seitenwände 34 zwischen den doppelten Lagen des Materialstreifens ist ein Kanal 36 gebildet, in den das Ende 12 einschiebbar ist. Ferner wird so Platz für das zweite magnetische Element 32 geschaffen, welches im hinteren Bereich des Kanals 36 angeordnet und verklebt ist.

Alternativ oder zusätzlich kann das zweite magnetische Element 32 auch in dem Gegenstück 22 vernäht werden.

Für den Fall, dass bei einem Zaum-Stirnband 20 die Gegenstücke 22, 122 fest in das Zaumzeug integriert werden sollen, kann eine Ausführungsform des Gegenstücks 22 ohne Schlaufe 26, ansonsten jedoch wie in Fig. 3A und 3B gezeigt, realisiert werden.

**Fig. 3B** zeigt den Gegenstand aus Fig. 3A, wobei hier das Ende 12 des bandförmigen Elements 10 in das zugeordnete Gegenstück 22 des Zaum-Stirnbands 20 eingeschoben ist. Das magnetische Element 14 des Endes 12 ist bis auf das zweite magnetische Element 32 des Gegenstücks 22 aufgeschoben worden. Aufgrund der sich hierdurch zwischen den Elementen 14, 32 aufbauenden magnetischen Anziehung wird das Ende 12 somit sicher, aber andererseits rasch lösbar, in dem Gegenstück 22 gehalten.

### Bezugszeichenliste

- 10: Bandförmiges Element
- 12, 112: Ende (bandförmiges Element)
- 14, 114: Magnetisches Element
- 16: Dekorationselement

- 20: Zaum-Stirnband
- 22, 122: Gegenstück
- 24, 124: Hülse
- 26, 126: Schlaufe
- 28, 128: Doppellagiger Bereich
- 32: Zweites magnetisches Element
- 34: Seitenwand
- 36: Kanal

- 40: Dekorationsband

## Patentansprüche

1. Zaum-Stirnband (20), insbesondere Pferdezaum-Stirnband,
mit einem bandförmigen Element (10), **dadurch gekennzeichnet, dass** an beiden Enden (12, 112) des bandförmigen Elements (10) jeweils ein magnetisches Element (14, 114) zur lösbaren Verbindung des jeweiligen Endes (12, 112) an einem zweiten magnetischen Element (32) angeordnet ist,
und mit zwei Gegenstücken (22, 122), welche jeweils ein zweites magnetisches Element (32) aufweisen, wobei jeweils ein Ende (12, 112) des bandförmigen Elements (10) lösbar an oder in einem Gegenstück (22, 122), nämlich an dem zweiten magnetischen Element (32) des Gegenstücks (22, 122), festlegbar bzw. festgelegt ist.

2. Zaum-Stirnband (20) nach Anspruch 1, **dadurch gekennzeichnet, dass** das Gegenstück (22, 122) als Hülse (24, 124) ausgeführt ist, in welcher das zweite magnetische Element (32) angeordnet ist, und in die ein Ende (12, 112) des bandförmigen Elements (10) zur lösbaren Festlegung des Endes (12, 112) an dem Gegenstück (22, 122), nämlich an dessen zweitem magnetischen Element (32), einführbar bzw. eingeführt ist.

3. Zaum-Stirnband (20) nach Anspruch 1 oder 2, **dadurch gekennzeichnet, dass** das Gegenstück (22, 122) fest in ein Zaumzeug integriert ist.

4. Zaum-Stirnband (20) nach Anspruch 1 oder 2, **dadurch gekennzeichnet, dass** das Gegenstück (22, 122) zur Anbringung an ein Zaumzeug eine Schlaufe (26, 126) aufweist, deren Durchgang im Wesentlichen senkrecht zur Längsrichtung des bandförmigen Elements (10) ausgerichtet ist.

5. Zaum-Stirnband (20) nach einem der Ansprüche 1 bis 4, **dadurch gekennzeichnet, dass** das Gegenstück (22, 122) aus Leder oder aus flexiblem Kunststoff gebildet ist und/oder aus einem Materialstreifen, gefertigt ist.

6. Zaum-Stirnband (20) nach Anspruch 5, wobei das Gegenstück (22, 122) aus einem Materialstreifen gefertigt ist, **dadurch gekennzeichnet, dass** der Materialstreifen zur Bildung einer Hülse (24, 124) und/oder zur Bildung einer Schlaufe (26, 126) einen doppellagigen Bereich (28, 128) aufweist.

7. Zaum-Stirnband (20) nach Anspruch 6, **dadurch gekennzeichnet, dass** das zweite magnetische Element (32) innerhalb des doppellagigen Bereichs (28, 128) aufgenommen, insbesondere verklebt oder vernäht, ist.

8. Zaum-Stirnband (20) nach einem der Ansprüche 1 bis 7, **dadurch gekennzeichnet, dass** das bandförmige Element (10) aus Leder oder aus flexiblem Kunststoff gebildet ist.

9. Zaum-Stirnband (20) nach einem der Ansprüche 1 bis 8, **dadurch gekennzeichnet, dass** das bandförmige Element (10) auf seiner Oberseite Dekorationselemente (16) aufweist.

10. Zaum-Stirnband (20) nach einem der Ansprüche 1 bis 9, **dadurch gekennzeichnet, dass** das magnetische Element (14, 114) teilweise oder vollständig von dem Material des bandförmigen Elements (10) umschlossen ist.

## Claims

1. Bridle headband (20), in particular horse bridle headband,
with a band-shaped element (10), **characterized in that** at each of the two ends (12, 112) of the band-shaped element (10) a magnetic element (14, 114) for releasable connecting of the respective end (12, 112) to a second magnetic element (32) is arranged,
and with two counterparts (22, 122), each having a second magnetic element (32), wherein each one of the ends (12, 112) of the band-shaped element (10) is detachably fixable or fixed to or in one of the counterparts (22, 122), namely to the second magnetic element (32) of the counterpart (22, 122).

2. Bridle headband (20) according to claim 1, **characterized in that** the counterpart (22, 122) is designed as a sleeve (24, 124) in which the second magnetic element (32) is arranged, and into which one end (12, 112) of the band-shaped element (10) can be inserted or is inserted for releasable fixing of the end (12, 112) to the counterpart (22, 122), namely to its second magnetic element (32).

3. Bridle headband (20) according to claim 1 or 2, **characterized in that** the counterpart (22, 122) is firmly integrated into a bridle.

4. Bridle headband (20) according to claim 1 or 2, **characterized in that** for attachment to a bridle, the counterpart (22, 122) comprises a loop (26, 126), the passage of which is oriented substantially perpendicularly to the longitudinal direction of the band-shaped element (10).

5. Bridle headband (20) according to any one of claims 1 to 4, **characterized in that** the counterpart (22, 122) is formed of leather or of flexible plastic, and/or is made of a strip of material.

6. Bridle headband (20) according to claim 5, wherein the counterpart (22, 122) is made of a strip of material, **characterized in that** the strip of material comprises a double-layered region (28, 128) for forming a sleeve (24, 124) and/or for forming a loop (26, 126).

7. Bridle headband (20) according to claim 6, **characterized in that** the second magnetic element (32) is accommodated, in particular glued or sewn, within the double-layered area (28, 128).

8. Bridle headband (20) according to any one of claims 1 to 7, **characterized in that** the band-shaped element (10) is formed of leather or of flexible plastic.

9. Bridle headband (20) according to any one of claims 1 to 8, **characterized in that** the band-shaped element (10) has decorative elements (16) on its upper side.

10. Bridle headband (20) according to any one of claims 1 to 9, **characterized in that** the magnetic element (14, 114) is partially or completely enclosed by the material of the band-shaped element (10).

## Revendications

1. Frontal de bride (20), en particulier frontal de bride de cheval,
avec un élément en forme de bande (10), **caractérisé en ce qu'**aux deux extrémités (12, 112) de l'élément en forme de bande (10) est disposé respectivement un élément magnétique (14, 114) pour la liaison détachable de l'extrémité respective (12, 112) à un deuxième élément magnétique (32),
et avec deux contre-pièces (22, 122), qui présentent chacune un deuxième élément magnétique (32), chacune extrémité (12, 112) de l'élément en forme de bande (10) pouvant être fixée ou étant fixée de manière amovible sur ou dans une contre-pièce (22, 122), à savoir sur le deuxième élément magnétique (32) de la contre-pièce (22, 122).

2. Frontal de bride (20) selon la revendication 1, **caractérisé en ce que** la contre-pièce (22, 122) est réalisée sous forme de douille (24, 124) dans laquelle est disposé le deuxième élément magnétique (32) et dans laquelle une extrémité (12, 112) de l'élément en forme de bande (10) peut être introduite ou est introduite pour fixer de manière amovible l'extrémité (12, 112) sur la contre-pièce (22, 122), à savoir sur son deuxième élément magnétique (32).

3. Frontal de bride (20) selon la revendication 1 ou 2, **caractérisé en ce que** la contre-pièce (22, 122) est intégrée de manière fixe dans une bride.

4. Frontal de bride (20) selon la revendication 1 ou 2, **caractérisé en ce que** pour être fixée à une bride la contre-pièce (22, 122) comporte une boucle (26, 126) dont le passage est orienté essentiellement perpendiculairement à la direction longitudinale de l'élément en forme de bande (10).

5. Frontal de bride (20) selon l'une des revendications 1 à 4, **caractérisé en ce que** la contre-pièce (22, 122) est formée de cuir ou de matière plastique flexible, et/ou est fabriquée à partir d'une bande de matériau.

6. Frontal de bride (20) selon la revendication 5, dans lequel la contre-pièce (22, 122) est fabriquée à partir d'une bande de matériau, **caractérisé en ce que** la bande de matériau présente une zone à double couche (28, 128) pour former une douille (24, 124) et/ou pour former une boucle (26, 126).

7. Frontal de bride (20) selon la revendication 6, **caractérisé en ce que** le deuxième élément magnétique (32) est logé, en particulier collé ou cousu, à l'intérieur de la zone à double couche (28, 128).

8. Frontal de bride (20) selon l'une des revendications 1 à 7, **caractérisé en ce que** l'élément en forme de bande (10) est formé de cuir ou de matière plastique flexible.

9. Frontal de bride (20) selon l'une des revendications 1 à 8, **caractérisé en ce que** l'élément en forme de bande (10) comporte des éléments décoratifs (16) sur sa face supérieure.

10. Frontal de bride (20) selon l'une des revendications 1 à 9, **caractérisé en ce que** l'élément magnétique (14, 114) est partiellement ou totalement entouré par le matériau de l'élément en forme de bande (10).
